# EUROPEAN PATENT SPECIFICATION

(11) **EP 2 392 215 B1**
(45) Date of publication and mention of the grant of the patent: **26.08.2015**
(21) Application number: 11382182.1
(22) Date of filing: 01.06.2011
(51) Int. Cl.: A23L 1/308, A21D 2/02, A21D 2/16, A21D 2/18, A21D 2/26, A21D 13/08, A23L 1/09, A21D 2/36, A21D 13/06

(54) **Low-calorie biscuit**
Kalorienarme Kekse
Biscuit hypocalorique

(30) Priority: 02.06.2010 ES 201030845
(43) Date of publication of application: 07.12.2011
(73) Proprietor: Imasdea, Innovaciones y Desarrollos Alimentarios, S.L.U., 40400 el Espinar-Segovia (ES)
(72) Inventor: Arroyo Matia, Alfonso, 40400 EL ESPINAR-SEGOVIA (ES); Francisco Santiago, Mª Jesús, 40400 EL ESPINAR-SEGOVIA (ES)
(74) Representative: Elzaburu Marquez, Alberto

(56) References cited:
- WO-A1-90/07880
- US-A1- 2007 298 152
- US-A1- 2008 085 354
- lIN SHENG-DUN ET AL: "REDUCED-CALORIE DANISH COOKIES", JOURNAL OF FOOD QUALITY, 6 April 2010 (2010-04-06), pages 14-26, XP55003239, DOI: 10.1111/j.1745-4557.2010.00307.x Retrieved from the Internet: URL:http://onlinelibrary.wiley.com/store/1 0.1111/j.1745-4557.2010.00307.x/asset/j.17 45-4557.2010.00307.x.pdf?v=1&t=gqcawyuv&s= e47267263931c3411d0e73231b81ba36132588e5 [retrieved on 2011-07-20]
- Kathy R. Niness: ""Inulin and Oligofructose: What Are They?", The Journal of Nutrition, 1 July 1999 (1999-07-01), pages 1402S-1406S, XP55003257, Retrieved from the Internet: URL:http://jn.nutrition.org/content/129/7/ 1402.full.pdf#page=1&view=FitH [retrieved on 2011-07-20]

## Description

### Object of the invention

As indicated by the title, the invention relates to a food product in the form of a biscuit having a low calorie or energy content, at least 30% less than another equivalent biscuit, whereby it can be classified as "light". According to an agreement prepared by experts of the *Comisión Interministerial para la Ordenación Alimentaria* (CIOA) (Interministerial Commission for Food Regulation) of 1990, and EC Regulation 1924/2006 of 20 December 2006 on nutrition and health claims made on foods, it is established that the requirements that a food must comply with in order to be classified as light are: existence of a market reference product and a reduction of the energy value of at least 30% with respect to the reference product.

Another objective of the invention is to obtain a uniquely flavored biscuit with organoleptic properties that give the consumer a pleasant feeling when tasting.

### Background of the Invention

A traditional biscuit contains wheat flour at a proportion between 40-60%, sugar 10-20% and oil or fats, preferably vegetable oils or fats, between 10-20%, in addition to salt, aromas, flavors and bicarbonates. They optionally also include eggs, vegetable fibers and starches.

There is currently no type of biscuit on the market that meets the aforementioned conditions and could therefore be classified as light. Many biscuit recipes bearing this classification are disclosed on the Internet, but there is no record of the actual amount of the calorie reduction that they supposedly provide, and most cannot be produced on an industrial level because the elimination of fats and sugars causes the lack of texturizing action in the dough, which makes processing thereof at an industrial level and the packaging and distribution thereof difficult because they easily crumble.

Document EP-0454721, as well as the International Application of the same family, WO 90/07880, describes a dietetic food, which can be in the form of a biscuit, containing wheat flour (which implicitly contains starch, oligofructose, gluten, wheat bran, and at least minute amounts of emulsifiers), sugar and vegetable oil in the standard proportions (40-60%, 10-16%, 10-16%, respectively), 5-10% of corn starch, 1.2-1.5% of bicarbonates, 0.1-2% of honey (which comprises some flavours and other sweeteners), 0.2-1% salt and 0.3-0.6 of flavours. It also contains a high proportion of natural fibers in a concentrated form of glucomannan which is extracted from Amorphophallus konjac, an Asian tuber which has the peculiarity that its volume increases when it is moistened with water up to 100 times its initial volume, whereby causing an enormous feeling of being full. It actually is not a low energy-yielding biscuit because the fat, flour and sugar content is standard, but it seems more like a product which causes a feeling of being full upon consuming it, so it is eating in minimal amounts. The two embodiments of the biscuits of application WO 90/07880 are prepared with 13,2% of a refined vegetable oil which is not specifically defined.

US Application US 2008/085354A1 describes cookies, comprising: Flour 32% (which implicitly is wheat flour and must contain gluten and at least a minute amount of wheat bran), Vegetable oil: 8,8%; Lecithin: 1,0% (as aromitizing agent together with acid cream powder); Corn starch: 4,0%; Inulin: 6,0%; Granulated sugar: 6,3%; Brown sugar: 5,0%; Corn syrup, 42 DE: 2,0%, Condensed milk: 2,4%; Sodium bicarbonate: 0,4%; Ammonium bicarbonate: 0,3%; Acid cream powder: 0,1%; Salt: 0,7%; Oats, fine ground (which contains oligofructose): 8,0%; Water: 9,0%; Polydextrose: 14,0%. Thus, the composition has 11,3% of added sugar and an additional sweetener, corn syrup, which improves texture and moisture retention and also contributes to the total energy value. Although the amount of vegetable oil is low (8,8%), the total amount of fat is higher, due to the presence of condensed milk, which adds animal saturated fats to the composition, and cooperates in the texturizing action with the added sugar (11,3%) and the present fibers (oligofructose, inulin and polydextrose).

As explained in the document by Kathy R. Niness "Inulin and Oligofructose: What Are They?", The Journal of Nutrition, 1 July 1999, pages 1402S-1406S, inulin, and the subgroup of inulin known as oligofructose (both of them heterogeneous blends of fructose polymers found widely distributed in nature as plant storage carbohydrates), are known to provide crispness to low fat cookies and to replace sugar in combination with high intensity sweeteners.

US Application US 2007/298152A1 describes butter cookies with 41% flour, salt, vanilla flavor and 20% of a sugar replacement composition comprising oligofructose, fibres (polydextrose, inulin, resistant maltodextrin) and sweeteners (sucralose, isolmalt) and, 15% eggs (a known texturizing agent) and 26% pasteurized butter. Other low intensity sweeteners can be also used, such as sorbitol, or erythritol, which is known as a sugar replacer in cookies (Sheng-Dun Lin et al., "Reduced-Calorie Danish Cookies", Journal of Food Quality, 6 April 2010, pages 14-26). Thus, due to the presence of butter, the estimated content of fats in the cookies of US 2007/298152A1 is higher than 21%, approximately one half of which fats are saturated fats of animal origin.

### Description of the Invention

It is a proven fact that the reason a person gains weight can be found in the overall computation of calories in their diet, hence there are increasingly more light products of all types because there are increasing more obese people who must restrict food consumption and try to eat foods that are less energetic than traditional foods, i.e., light foods.

The human body covers its energy needs for growth, body temperature maintenance and for all types of work and metabolic functions by means of the combustion of nutrients, such as fats, carbohydrates or proteins, although the latter have a different essential function. As is known, combustion is simply the combination of carbon and hydrogen with oxygen to form carbon dioxide and water. In nutritional substances (fats, carbohydrates and proteins), this combustion is slow and the energy released in the process can be used for bodily functioning through metabolism. Like in combustion where the value is expressed in calories, this unit also serves for the calorie or energy content of a substance. The most internationally accepted calorie unit is the joule because it lends itself better to the transformation of the different forms of energy. A kilocalorie (Kcal) is the equivalent of 4.184 kilojoules (kJ).

It can be readily deduced that in order to obtain a light biscuit the fats, sugars and flour in its general recipe or mixture must be reduced. Nevertheless, this is not an easy task and constitutes the problem to be solved in this invention. The reduction or elimination of sugar causes the mixture to be lacking in the texture necessary for allowing kneading and rolling using the standard machinery in any biscuit factory. The reduction of flours must in turn be made up for with other materials in order to be able to obtain a biscuit having a weight equivalent to another conventional biscuit with lower calorie content.

To obtain a light biscuit, the sugar has first been substituted with erythritol, with is a calorie-free sweetener. Since the removal of sugar and reduction of fats cause the loss of texturizing action, other materials intended to make up for this action have been included, being able to point out among them the different types of starches of different origins, such as modified wheat and corn starch.

The percentage of fats has been considerably reduced, being substituted with fibers, some of them not common in biscuit production, such as microcrystalline cellulose, carboxymethyl cellulose and the oligofructose.

Microcrystalline cellulose, carboxymethyl cellulose and oligofructose are used as stabilizers, emulsifiers and gelling agents in order to make up for all these effects provided by the fats in a conventional biscuit.

Oligofructose furthermore plays a role in the intestine in the composition and physiology of the microbiota, in the absorption of minerals such as calcium, in lipid metabolism, in immunological functions and in the reduction of the risk of cancer. Oligofructose acts positively on cholesterol levels, reducing the serum triglyceride level due to the reduction of fatty acids synthesized by the liver, through a reduction of the activity of all lipogenic liver enzymes.

Aroma and yogurt powder have been used to provide flavor, beta-carotene has been used for color and various types of bicarbonates have been used for texture and as raising agents.

Therefore, the low-calorie biscuit object of the invention includes the following raw materials which form part of the total weight of the mixture in the following percentages:

| | |
|---|---|
| Wheat flour | 40-42% |
| High oleic sunflower oil | 6-8% |
| Starches | 18-23% |
| Fibers | 11-14% |
| Raising agents and/or texturizing agents | 1.5-2.5% |
| Sweeteners | 7-9% |
| Salt | 0.3-1.0% |
| Aromas/flavors | 0.5-1.3% |
| Emulsifiers | 0.2-0.6% |
| The following ingredients are optionally included: | |
| Gluten | 1-2.5% |
| Wheat bran | 2.5-5% |
| Seeds | 2-3%, |

wherein
the starches included in this biscuit are the following and are part of the recipe in the following percentages with respect to the total weight of the mixture:
- Modified wheat starch 16-22%
- Corn starch and modified corn starch 1.0-4.0%;
the fibers used are the following and are part of the recipe in the following percentages:
- Oligofructose 9-12%
- Microcrystalline cellulose and 2.5-6% carboxymethyl cellulose; and
the sweeteners included in this biscuit and their percentages are the following:
- Erythritol 4-9%
- Sucralose 0.01-0.05%
- Sorbitol 1-3%.

The raising agents and/or texturizing agents included in this biscuit can be the following and be present in the following percentages:
- Sodium bicarbonate 1-2%
- Potassium bitartrate 0.4-0.7%
- Ammonium bicarbonate 0.01-0.03%

Yogurt powder and aroma have been used as flavoring agents, which are part of the recipe in the following percentages with respect to the total weight of the mixture:
- Yogurt powder 0.2-0.6%
- Aroma 0.3-0.7%

Fatty acid mono- and diglycerides have been used as an emulsifier, constituting between 0.2-0.6% of the total weight of the mixture.

### Preferred Embodiments

To prepare biscuits of this type, the standard process consisting of kneading all the ingredients with water has been followed, allowing the dough to stand in order to achieve good molding without gluten developing.

In the proposed embodiment, the following ingredients have been chosen in the indicated percentages of the total weight of the mixture:

| Ingredients | % |
|---|---|
| Wheat flour | 41.5 |
| Modified wheat starch | 15.0 |
| Oligofructose | 9.5 |
| High oleic sunflower oil | 7.0 |
| Erythritol | 7 |
| Wheat bran | 3.5 |
| Microcrystalline cellulose | 2.0 |
| Carboxymethyl cellulose | 0.5 |
| Sorbitol | 1.3 |
| Corn starch and modified corn starch | 1.5 |
| Sodium bicarbonate | 1.4 |
| Potassium bitartrate | 0.6 |
| Ammonium bicarbonate | 0.02 |
| Salt | 0.7 |
| Aromas | 0.5 |
| Fatty acid mono- and diglycerides | 0.4 |
| Sucralose | 0.04 |

With these raw materials, using fibers as a substitution for fat and sugars, a product having very limited calories, 322 kcal, has been obtained. The nutritional facts obtained from the proposed example were the following:

| Nutritional information | | Unit | Amount |
|---|---|---|---|
| Description | | | |
| Energy | | Kcal | 322 |
| Energy | | KJ | 1347 |
| Proteins | | g | 5.7 |
| Carbohydrates | | g | 47.1 |
| | sugars | g | 1.1 |
| Fats | | g | 8.6 |
| | saturated | g | 1.1 |
| | monounsaturated | g | 6.4 |
| | polyunsaturated | g | 1.1 |
| Dietary fiber | | g | 30.5 |
| Sodium | | g | 0.7 |

Other similar, "digestive"-type biscuits have between 470 and 490 kcal/100g as the market mean.

Having sufficiently described the nature of the invention as well as a preferred embodiment thereof, it is hereby stated that the materials and their described percentages could be modified provided that this does not involve an alteration of the essential features of the invention that are claimed below.

## Claims

1. A low-calorie biscuit, **characterized in that** it includes the following raw materials which form part of the total weight of the mixture in the following percentages:
- Wheat flour 40-42%
- High oleic sunflower oil 6-8%
- Starches 18-23%
- Fibers 11-14%
- Raising agents and/or texturizing agents 1.5-2.5%
- Sweeteners 7-9%
- Salt 0.3-1.0%
- Aromas/flavors 0.5-1.3%
- Emulsifiers 0.2-0.6% and, the following ingredients are optionally included:
- Gluten 1-2.5%
- Wheat bran 2.5-5%
- Seeds 2-3%,
wherein,
the starches included in the biscuit are the following and are part of the recipe in the following percentages with respect to the total weight of the mixture:
- Modified wheat starch 16-22%
- Corn starch and modified corn starch 1.0-4.0%; the fibers included therein are the following and are part of the recipe in the following percentages with respect to the total weight of the mixture:
- Oligofructose 9-12%
- Microcrystalline cellulose and 2.5-6% carboxymethyl cellulose;
and
the sweeteners included therein are the following and are part of the receipe in the following percentages with respect to the total weight of the mixture:
- Erythritol 4-9%
- Sucralose 0.01-0.05%
- Sorbitol 1-3%.

2. The low-calorie biscuit according to claim 1, **characterized in that** the raising agents and/or texturizing agents included therein are the following and are part of the recipe in the following percentages with respect to the total weight of the mixture:
- Sodium bicarbonate 1-2%
- Potassium bitartrate 0.4-0.7%
- Ammonium bicarbonate 0.01-0.03%.

3. The low-calorie biscuit according to claim 1, **characterized in that** yogurt powder and aroma have been used as flavoring agents, which are part of the recipe in the following percentages with respect to the total weight of the mixture:
- Yogurt powder 0.2-0.6%
- Aroma 0.3-0.7%.

4. The low-calorie biscuit according to claim 1, **characterized in that** fatty acid mono- and diglycerides have been used as an emulsifier, which are part of the recipe at a percentage comprised between 0.2-0.6% with respect to the total weight of the mixture.

5. A low-calorie biscuit **characterized in that** it has been prepared by a process wherein all the ingredients have been kneaded with water and the dough is allow to stand in order to achieve good molding without gluten developing, wherein the following ingredients in the indicated percentage of the total weight of the mixture have been chosen:
- Wheat fluor 41.5
- Modified wheat starch 15.0
- Oligofructose 9.5
- High oleic sunflower oil 7.0
- Erythritol 7
- Wheat bran 3.5
- Microcrystalline cellulose 2.0
- Carboxymethyl cellulose 0.5
- Sorbitol 1.3
- Corn Starch and modified corn starch 1.5
- Sodium bicarbonate 1.4
- Potassium bitartrate 0.6
- Ammonium bicarbonate 0.02
- Salt 0.7
- Aromas 0.5
- Fatty acid mono- and diglycerides 0.4
- Sucralose 0.04.

## Patentansprüche

1. Kalorienreduzierter Keks, **dadurch gekennzeichnet, dass** er die folgenden Rohmaterialien enthält, die einen Teil des Gesamtgewichts der Mischung in den folgenden Prozentanteilen bilden:
- Weizenmehl 40-42 %
- Sonnenblumenöl mit hohem Ölsäuregehalt 6-8 %
- Stärken 18-23 %
- Ballaststoffe 11-14 %
- Backtreibmittel und/oder Strukturierungsmittel 1,5-2,5 %
- Süßungsmittel 7-9 %
- Salz 0,3-1,0 %
- Aromen/Geschmacksstoffe 0,5-1,3 %
- Emulgiermittel 0,2-0,6 % und wobei die folgenden Zutaten optional enthalten sind:
- Gluten 1-2,5 %
- Weizenkleie 2,5-5 %
- Samen 2-3 %,
wobei
die im Keks enthaltenen Stärken die folgenden sind und Teil der Rezeptur in den folgenden Prozentanteilen bezogen auf das Gesamtgewicht der Mischung sind:
- modifizierte Weizenstärke 16-22 %
- Maisstärke und modifizierte Maisstärke 1,0-4,0 %;
wobei die darin enthaltenen Ballaststoffe die folgenden sind und Teil der Rezeptur in den folgenden Prozentanteilen bezogen auf das Gesamtgewicht der Mischung sind:
- Oligofruktose 9-12 %
- mikrokristalline Cellulose und Carboxymethylcellulose 2,5-6 %; und
wobei die darin enthaltenen Süßungsmittel die folgenden sind und Teil der Rezeptur in den folgenden Prozentanteilen bezogen auf das Gesamtgewicht der Mischung sind:
- Erythritol 4-9 %
- Sucralose 0,01-0,05 %
- Sorbitol 1-3 %.

2. Kalorienreduzierter Keks nach Anspruch 1, **dadurch gekennzeichnet, dass** die darin enthaltenen Backtreibmittel und/oder Strukturierungsmittel die folgenden sind und Teil der Rezeptur in den folgenden Prozentanteilen bezogen auf das Gesamtgewicht der Mischung sind:
- Natriumbicarbonat 1-2 %
- Kaliumbitartrat 0,4-0,7 %
- Ammoniumbicarbonat 0,01-0,03 %

3. Kalorienreduzierter Keks nach Anspruch 1, **dadurch gekennzeichnet, dass** Joghurtpulver und Aroma als Geschmackstoffe verwendet wurden, die Teil der Rezeptur in den folgenden Prozentanteilen bezogen auf das Gesamtgewicht der Mischung sind:
- Joghurtpulver 0,2-0,6 %
- Aroma 0,3-0,7 %

4. Kalorienreduzierter Keks nach Anspruch 1, **dadurch gekennzeichnet, dass** Fettsäurenmonoglyzeride und -diglyzeride als Emulgiermittel verwendet wurden, die Teil der Rezeptur in einem Prozentanteil im Bereich von 0,2-0,6 % bezogen auf das Gesamtgewicht der Mischung sind.

5. Kalorienreduzierter Keks, **dadurch gekennzeichnet, dass** dieser mittels eines Verfahrens hergestellt wurde, wobei alle Zutaten mit Wasser geknetet wurden und der Teig stehen gelassen wurde, um eine gute Ausformung ohne die Entwicklung von Gluten zu erhalten, wobei die folgenden Zutaten in den angegebenen Prozentanteilen des Gesamtgewichts der Mischung gewählt wurden:
- Weizenmehl 41,5
- modifizierte Weizenstärke 15,0
- Oligofruktose 9,5
- Sonnenblumenöl mit hohem Ölsäuregehalt 7,0
- Erythritol 7
- Weizenkleie 3,5
- mikrokristalline Cellulose 2,0
- Carboxymethylcellulose 0,5
- Sorbitol 1,3
- Maisstärke und modifizierte Maisstärke 1,5
- Natriumbicarbonat 1,4
- Kaliumbitartrat 0,6
- Ammoniumbicarbonat 0,02
- Salz 0,7
- Aromen 0,5
- Fettsäurenmonoglyzeride und -diglyzeride 0,4
- Sucralose 0,04.

## Revendications

1. Biscuit hypocalorique **caractérisé en ce qu'**il comprend les matières premières suivantes qui font partie du poids total du mélange dans les pourcentages suivants :
- farine de blé 40-42 %
- huile de tournesol à haute teneur en acide oléique 6-8 %
- amidons 18-23 %
- fibres 11-14 %
- agents de levage et/ou agents de texturation 1,5-2,5 %
- édulcorants 7-9 %
- sel 0,3-1,0 %
- aromes/parfums 0,5-1,3 %
- émulsionnants 0,2-0,6 % et les ingrédients suivants sont éventuellement inclus :
- gluten 1-2,5 %
- son de blé 2,5-5 %
- graines 2-3 %, dans lequel,
les amidons inclus dans le biscuit sont les suivants et font partie de la recette dans les pourcentages suivants par rapport au poids total du mélange :
- amidon de blé modifié 16-22 %
- amidon de maïs et amidon de maïs modifié 1,0-4,0 % les fibres qui sont incorporées sont les suivantes et font partie de la recette dans les pourcentages suivants par rapport au poids total du mélange :
- oligofructose 9-12 %
- cellulose microcristalline et carboxyméthylcellulose 2,5-6 %
et
les édulcorants qui sont incorporés sont les suivants et font partie de la recette dans les pourcentages suivants par rapport au poids total du mélange :
- érythritol 4-9 %
- sucralose 0,01-0,05%
- sorbitol 1-3 %.

2. Biscuit hypocalorique selon la revendication 1, **caractérisé en ce que** les agents de levage et/ou de texturation incorporés sont les suivants et font partie de la recette dans les pourcentages suivants par rapport au poids total du mélange :
- bicarbonate de sodium 1-2 %
- bitartrate de potassium 0,4-0,7 %
- bicarbonate d'ammonium 0,01-0,03%

3. Biscuit hypocalorique selon la revendication 1, **caractérisé en ce que** de la poudre de yaourt et un arome ont été utilisés comme agents aromatiques, qui font partie de la recette dans les pourcentages suivants par rapport au poids total du mélange :
- poudre de yaourt 0,2-0,6 %
- arome 0,3-0,7 %.

4. Biscuit hypocalorique selon la revendication 1, **caractérisé en ce que** des mono- et diglycérides d'acides gras ont été utilisés comme émulsionnants qui font partie de la recette dans un pourcentage compris entre 0,2-0,6 % par rapport au poids total du mélange.

5. Biscuit hypocalorique, **caractérisé en ce qu'**il a été préparé par un procédé dans lequel tous les ingrédients ont été malaxés avec de l'eau et on laisse la pâte reposer afin d'assurer un bon moulage sans développer de gluten, dans lequel les ingrédients suivants ont été choisis dans le pourcentage indiqué du poids total du mélange :
- farine de blé 41,5
- amidon de blé modifié 15,0
- oligofructose 9,5
- huile de tournesol à haute teneur en acide oléique 7,0
- érythritol 7
- son de blé 3,5
- cellulose microcristalline 2,0
- carboxyméthylcellulose 0,5
- sorbitol 1,3
- amidon de maïs et amidon de maïs modifié 1,5
- bicarbonate de sodium 1,4
- bitartrate de potassium 0,6
- bicarbonate d'ammonium 0,02
- sel 0,7
- aromes 0,5
- mono- et diglycérides d'acides gras 0,4
- sucralose 0,04.
